# FASCICULE DE BREVET EUROPEEN

(11) **EP 0 394 897 B1**
(45) Date de publication et mention de la délivrance du brevet: **10.08.1994**
(21) Numéro de dépôt: 90107622.4
(22) Date de dépôt: 23.04.1990
(51) Int. Cl.: G05D 1/08, G05D 1/10

(54) **Procédé de mise à poste d'un satellite de télécommunications géostationnaire**
Verfahren zur Positionierung eines geostationären Telekommunikationssatelliten
Method for posting a geostationary telecommunication satellite

(30) Priorité: 24.04.1989 FR 8905403
(43) Date de publication de la demande: 31.10.1990
(73) Titulaire: ALCATEL ESPACE, F-92407 Courbevoie Cédex (FR)
(72) Inventeur: Bouzat, Charles, F-31520 Ramonville (FR)
(74) Mandataire: Weinmiller, Jürgen

(56) Documents cités:
- EP-A- 0 174 715
- EP-A- 0 209 429
- EP-A- 0 260 957
- FR-A- 2 365 154
- FR-A- 2 373 823
- FR-A- 2 532 911
- FR-A- 2 601 159

## Description

La présente invention se rapporte à un procédé de mise à poste d'un satellite de télécommunications géostationnaire.

Traditionnellement, la mise à poste (ou "phase pré-opérationnelle") d'un satellite de télécommunications comprend les phases successives suivantes :
- Injection, à l'aide du lanceur, du satellite sur une orbite de transfert des satellites géostationnaires ; cette orbite intermédiaire est elliptique et l'injection par le lanceur est effectuée sensiblement au périgée de celle-ci.
- Acquisition de l'attitude du tir, ou manoeuvre d'apogée ; ce tir de l'apogée est destiné à être effectué au voisinage (c'est à dire autour) de l'apogée de l'orbite de transfert dans le but de placer le satellite sur son orbite de dérive définitive qui est une orbite circulaire dont le rayon est sensiblement égal à l'apogée de l'orbite de transfert.
- Exécution, au voisinage de cette apogée, de ce tir, ou manoeuvre d'apogée par mise à feu de la tuyère du moteur d'apogée du satellite.
- Lorsque l'orbite circulaire de dérive définitive est atteinte (après une ou plusieurs manoeuvres d'apogée) : dérive du satellite sur cette orbite jusqu'à ce qu'il atteigne sa position orbitale géostationnaire définitive. C'est seulement à ce stade que la charge utile est rendue opérationnelle, et que débute en conséquence la "phase opérationnelle" de la vie du satellite.

Durant la phase opérationnelle, la plupart des satellites de télécommunications actuels sont stabilisés selon les trois axes par une roue fixe qui fournit une raideur gyroscopique et permet la commande indirecte du lacet à travers la commande d'attitude en roulis. La commande en tangage est assurée par variation de la vitesse de la roue. Ce système minimal garantit une précision de pointage qui dépend du capteur utilisé, de la valeur du moment cinétique et de la résolution du couple de commande. Elle peut être améliorée par l'utilisation de dispositifs supplémentaires tels que bobines magnétiques, voile solaire, roues inclinées ou roues de réaction transverses mais ceci au détriment de la masse et du coût.

La plupart des satellites de télécommunications géostationnaires qui sont actuellement sur orbite ont une configuration dite "Nord-Sud" par laquelle l'ensemble du satellite, c'est à dire la plate-forme et la charge utile, est en permanence pointé vers la terre, le générateur solaire se déployant et s'orientant toutefois selon l'axe perpendiculaire à l'orbite et les panneaux solaires tournant autour de leur axe longitudinal de façon à être en permanence pointés vers le soleil. Dans une telle configuration, l'axe de la roue d'inertie est perpendiculaire au vecteur de poussée lors de la mise à feu du moteur d'apogée , de sorte que cette roue ne doit pas être mise en rotation au cours de la manoeuvre d'apogée afin de ne pas contrarier celle-ci.

Dans la littérature, par exemple dans le document FR-A-2472509, a été décrite une autre configuration, qui utilise pour le satellite une plate-forme et des panneaux solaires constamment pointés vers le soleil, et une charge utile qui est montée rotative par rapport à cette plate-forme de manière à être constamment pointée vers la terre. Ceci impose que la charge utile soit entièrement aménagée sur une face Nord ou Sud qui est perpendiculaire à l'axe lanceur en configuration de lancement. Il en résulte, dans un tel cas, que l'axe de la roue d'inertie est aligné avec la direction de poussée du moteur d'apogée.

Avec la première configuration, qui est celle de la plupart des satellites géostationnaires actuellement sur orbite, il existe deux grands procédés de stabilisation du satellite lors de sa mise à poste à partir de l'orbite transfert.

Un premier procédé, dit "transfert spinné", consiste à injecter le satellite sur son orbite de transfert en lui imprimant un mouvement de rotation, ou "spin", autour de l'axe de son moteur d'apogée. A titre d'exemple, les phases successives d'une telle mise à poste sont les suivantes :
- injection, par la fusée lançeuse, du satellite dans une attitude en rotation selon les données suivantes :
   - précision d'attitude inférieure à 6 degrés
   - vitesse angulaire transverse inférieure à 2 degrés/seconde
   - vitesse de spin de l'ordre de 5 tours/minute
- mise sous tension du système de stabilisation, déploiement des antennes, et augmentation de la vitesse du spin à 13 tours/minute
- détermination de l'attitude et de la vitesse de spin par télémesure du capteur d'élévation solaire et terrestre
- réorientation de l'axe de spin avant chaque manoeuvre d'apogée
- manoeuvre d'apogée (en une ou plusieurs manoeuvres)
- diminution de la vitesse de spin
- acquisition solaire et déploiement des générateurs solaires
- acquisition de l'attitude finale.

Un tel procédé, qui présente une grande sécurité de part la rotation imposée au satellite au cours de la mise à poste, a pour avantages de minimiser les manoeuvres d'attitudes et le matériel nécessaire à la mise à poste. En revanche, les effets de ballottement de liquide (carburant et comburant) liés aux grandes quantités d'ergols embarqués sont difficiles à maîtriser et à modéliser. En outre, cette configuration "spinnée" a pour inconvénient d'être contraignante du point de vue du rapport d'inertie et des problèmes d'aménagement et d'équilibrage du satellite afin de satisfaire aux critères de stabilité.
Un second procédé de stabilisation en transfert, dit "transfert stabilisé trois-axes", décrit notamment dans le document EP-A-0 209 429, consiste à injecter le satellite sur son orbite de transfert selon une attitude stabilisée trois-axes et à utiliser un matériel spécifique pour commander l'orientation tout au long du transfert.Par exemple, les phases successives d'une telle mise à poste sont les suivantes :
- injection du satellite par sa fusée lançeuse dans une attitude trois-axes, avec une précision d'attitude de l'ordre de 3 degrés, une vitesse angulaire quasi-nulle dans l'attitude désirée, et le générateur solaire orienté vers le soleil
- calibration des dérives des gyromètres, acquisition solaire, acquisition terre, manoeuvre de rotation de 360 degrés autour de chaque axe pour calibration fine des gyromètres
- pointage solaire du générateur solaire
- Deuxième calibration des gyromètres (ceux-ci ayant dérivé entre-temps)
- acquisition de l'attitude du tir d'apogée
- manoeuvre d'apogée (une ou plusieurs manoeuvres) sous contrôle des gyromètres
- acquisition du soleil et déploiement du générateur solaire
- acquisition d'attitude nominale.

Ce second procédé a pour inconvénient de ne pas présenter la sécurité de stabilisation (en cas de panne par exemple) qui est inhérente au transfert spinné. En outre, il nécessite un matériel spécifique à l'opération de mise à poste, dont :
. un capteur solaire fin à plusieurs têtes optiques ;
. un capteur terrestre infrarouge ; et
. un bloc gyrométrique intégrateur trois-axes ; de sorte qu'il est finalement complexe et coûteux.

Enfin, ces procédés connus ont pour autre inconvénient de manquer d'autonomie, en nécessitant une charge au sol non négligeable.

L'invention vise à remédier à ces inconvénients. Elle se rapporte à cet effet à un procédé de mise à poste d'un satellite de télécommunications géostationnaire, ce procédé étant du type selon lequel cette mise à poste comprend les phases successives suivantes :
- injection, à l'aide du lanceur, du satellite sur une orbite de transfert des satellites géostationnaires ;
- acquisition de l'attitude du tir d'apogée, effectué au voisinage de l'apogée dans le but de placer le satellite sur son orbite de dérive définitive ;
- exécution de ce tir, ou manoeuvre, d'apogée ;
- lorsque cette orbite de dérive est atteinte, après un ou plusieurs tirs d'apogée : dérive du satellite sur orbite jusqu'à atteinte par celui-ci de sa position orbitale définitive,
ce procédé consistant successivement, en adoptant pour ce satellite une configuration, connue en soi, alliant une plate-forme toujours pointée vers le soleil et une charge utile orientable par rapport à cette plate-forme et toujours pointée vers la terre :
- à injecter le satellite sur son orbite de transfert dans une attitude stabilisée trois-axes correspondant sensiblement à l'attitude de la manoeuvre d'apogée ;
- à mettre sous tension le dispositif de commande d'orientation équipant normalement ce satellite ;
- à effectuer alors l'opération d'acquisition solaire ;
- à mettre en vitesse, après avoir procédé à l'annulation des erreurs de pointage en vitesse, la roue cinétique qui équipe normalement le satellite, l'axe de rotation de cette roue cinétique étant, en raison de la configuration précitée adoptée pour ce satellite, alignée avec l'axe de poussée du moteur d'apogée, et cette mise en vitesse étant effectuée à une valeur suffisante pour obtenir une bonne rigidité gyroscopique ;
- à déployer au moins partiellement le générateur solaire ;
- à commander l'orientation sur les trois-axes tout en annulant, de manière classique, les vitesses angulaires par réduction de la nutation ;
- à préparer alors la manoeuvre d'apogée en procédant, grâce à la connaissance de l'attitude, à l'orientation du moment cinétique de ladite roue cinétique selon l'axe du tir d'apogée ;
- à procéder enfin, au voisinage de l'apogée de l'orbite de transfert, au tir d'apogée tout en procédant, au cours de ce tir d'apogée, à une commande d'orientation du satellite , et
- lorsque l'orbite de dérive définitive est atteinte, après un ou plusieurs de ces tirs d'apogée, à procéder classiquement à la dérive du satellite jusqu'à sa position orbitale allouée.

Avantageusement, ladite commande d'orientation sur les trois axes est effectué par l'intermédiaire d'un capteur solaire deux-axes équipant normalement le satellite pour être utilisé à poste sur celui-ci.

Selon une première forme d'exécution, la préparation de la manoeuvre d'apogée est effectuée en utilisant, pour obtenir la référence d'attitude du troisième axe proche de la direction solaire, les capteurs équipant normalement la charge utile du satellite, tels que capteur stellaire ou capteur terrestre.

Selon une autre forme d'exécution, la préparation de la manoeuvre d'apogée est effectuée en utilisant un gyromètre deux axes équipant ce satellite et en effectuant, pour obtenir la référence d'attitude du troisième axe proche de la direction solaire, une manoeuvre spécifique consistant en une rotation du satellite de 90 degrés autour du moment cinétique de la roue, cette rotation utilisant une référence gyroscopique, ce qui conduit à un échange des axes transverses à la roue cinétique et permet d'obtenir la référence d'attitude à l'aide d'un moyen optique qui, à titre d'exemples, soit comprend une tête optique supplémentaire orthogonale à celle normalement utilisée à poste, soit consiste en une lame semi-réfléchissante inclinée à 45 degrés devant la tête optique du senseur normalement utilisé à poste.

De toute façon, l'invention sera bien comprise, et ses avantages et autres caractéristiques ressortiront, lors de la description suivante d'un exemple non limitatif de réalisation, en référence au dessin schématique annexé dans lequel :
- Figure 1 montre schématiquement la configuration utilisée pour ce satellite de télécommunications,
- Figure 2 montre les phases essentielles du transfert ; et
- Figure 3 est un schéma explicatif d'une des façons de préparer la manoeuvre d'apogée.

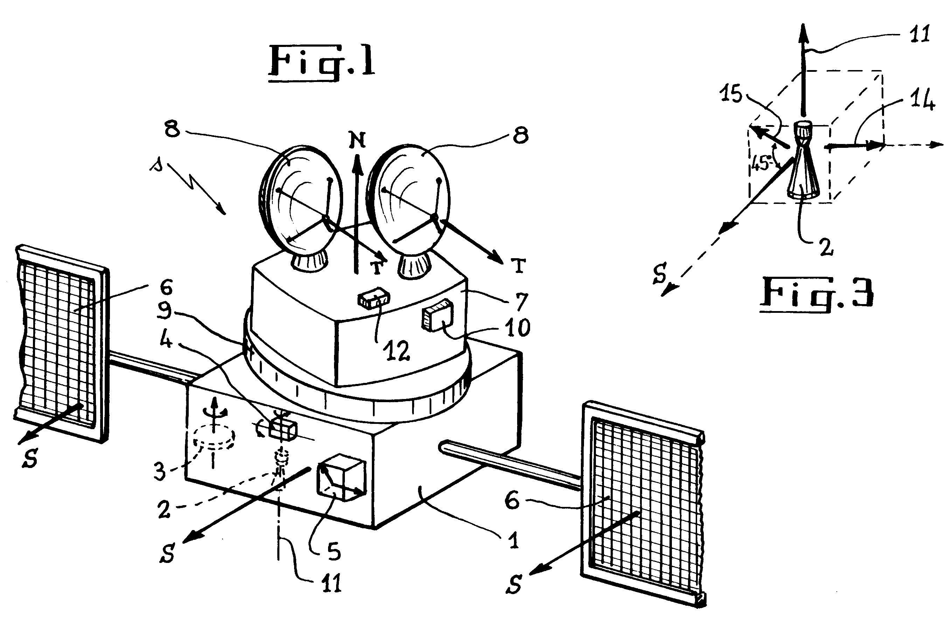

En se reportant à la figure 1, ce satellite de télécommunications géostationnaires est composé :
. d'une plate-forme 1 qui, entre autres, comporte des tuyères, dont la tuyère 2 du moteur d'apogée, une roue cinétique 3, un capteur solaire deux-axes 4, et un gyromètre intégrateur deux-axes 5 de type gyroscope sec, et qui porte le générateur solaire avec ses deux panneaux solaires déployables 6 ; et
. d'une charge utile 7, qui comporte toute la partie radioélectrique dont les antennes 8, et qui est fixée sur un plateau tournant 9 monté sur la plate-forme 1 ; dans la majorité des cas, cette charge utile comporte au moins un capteur terrestre infrarouge 10 et/ou au moins un capteur stellaire 12.

Conformément à ce type de configuration, et lorsque le satellite est à poste, la plate-forme 1 et les panneaux solaires 6 sont en permanence pointés en direction S du soleil, tandis que le plateau 9 tourne constamment de façon à maintenir en permanence la charge utile 7 pointée en direction T de la terre (la charge 7 effectue donc un tour par jour par rapport au soleil). Ceci impose que cette charge utile soit entièrement aménagée sur une face Nord ou Sud (Nord N dans cet exemple) qui est perpendiculaire à l'axe lanceur 11 (axe de la tuyère 2 du moteur d'apogée) en configuration de lancement. L'axe de la roue d'inertie 3 se trouve donc, dans cette configuration, aligné avec la direction de poussée du moteur d'apogée 2.

Il s'ensuit que, conformément au procédé de l'invention, la roue cinétique 3 peut être mise en rotation avant et pendant la manoeuvre d'apogée, c'est à dire déjà sur l'orbite de transfert, ce qui permet, entre autres, non seulement de stabiliser l'attitude pendant le transfert, mais encore dans le plupart des cas d'éviter d'avoir à embarquer du matériel spécifique pour l'orbite de transfert.

En d'autres termes, afin de bénéficier au moins partiellement des avantages du transfert spinné sans en avoir les inconvénients, l'invention propose de remplacer le moment cinétique obtenu par la rotation du satellite par un moment cinétique interne apporté par la roue d'inertie. Un tel concept permet d'utiliser la roue d'inertie fonctionnant pendant la phase opérationnelle. Associée, par exemple, au capteur solaire utilisé aussi à poste et au système de tuyères de commande d'orientation, cet ensemble permet de maintenir précisément l'attitude pendant les phases de préparation de manoeuvres. Un tel système s'avère donc simple, fiable, et peu coûteux car il ne met en jeu aucun matériel spécifique dans la majorité des cas.

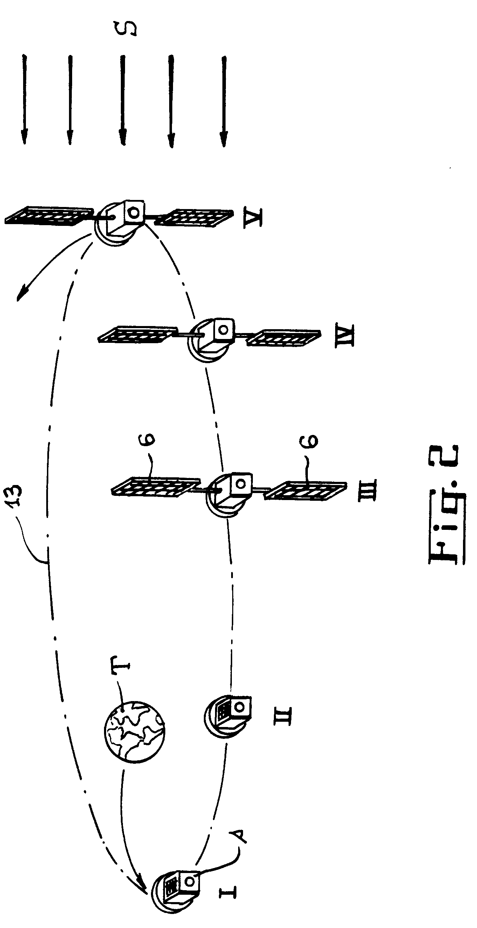

En se reportant maintenant à la figure 2, sur laquelle sont représentés la terre T et l'orbite du transfert géostationnaire 13, les phases successives du transfert et plus généralement de l'opération de mise à poste du satellite s, sont les suivantes :
- I :: Injection, par la fusée lançeuse, du satellite s sur son orbite de transfert 13 dans une attitude stabilisée trois axes correspondant, aux erreurs d'orientation de la fusée lançeuse près, à l'attitude de la manoeuvre d'apogée.
- II :: Mise sous tension du dispositif de contrôle d'attitude équipant le satellite, et mise en vitesse de la roue cinétique 3 à une valeur suffisante pour obtenir une bonne rigidité gyroscopique (typiquement 50 Nms par exemple).
- III :: Ce mode d'acquisition étant effectué, en 700 secondes au maximum pour fixer les idées, l'ordre de déploiement du générateur solaire 6 est alors transmis, ce qui permet de limiter la profondeur de décharge des batteries à 20% pour par exemple une charge utile de 3000 ampères-heure ; l'attitude est alors stabilisée sur les trois axes par l'intermédiaire du capteur solaire deux- axes 4, normalement utilisé à poste, les vitesses angulaires étant classiquement annulées par réduction de la nutation ; considérant une précision de mesure du capteur solaire grand champ de 0,05 degrés, l'attitude selon l'axe proche de la direction du soleil peut être alors maintenue avec une précision inférieure à 0,5 degrés.
- IV :: Préparation de la manoeuvre d'apogée en procédant, grâce à la connaissance de l'attitude, à l'orientation du moment cinétique de la roue 3 selon l'axe du tir d'apogée.
Afin de préparer la manoeuvre d'apogée, il est en effet nécessaire d'orienter le moment cinétique de cette roue 3 selon la direction requise par l'optimisation de l'incrément de vitesse lors du tir d'apogée. Pour cela, il faut obtenir la référence d'attitude du troisième axe proche de la direction solaire, ce qui peut être réalisé de deux façons :
. soit en utilisant, s'ils existent, les capteurs de la charge utile 7, tels que le capteur stellaire 12 ou le capteur terrestre 10 ; il s'agit là d'une solution simple, d'autant plus que l'erreur d'orientation de la roue est limitée à quelques degrés, et par conséquent simplifie la reconnaissance d'étoile ;
. soit (figure 3) en utilisant le gyroscope 5 à deux axes 14, 15 (l'axe 15 étant un axe à 45 degrés par rapport à la direction du soleil) et en effectuant une manoeuvre spécifique consistant en une rotation de 90 degrés autour du moment cinétique en utilisant une référence gyroscopique. Ceci conduit à un échange des axes transverses à la roue 3, et permet d'obtenir la référence d'attitude soit à travers l'utilisation d'une tête optique supplémentaire orthogonale à celle utilisée à poste, soit à travers une lame semi-réfléchissante inclinée à 45 degrés devant la tête optique du capteur utilisé à poste (le soleil passe à travers cette lame dans une position directe, et il se réfléchit sur cette dernière dans une position orthogonale, ce qui permet d'utiliser le capteur solaire équipant normalement le satellite pour obtenir cette référence d'attitude). Dans l'attitude inertielle initiale, le gyromètre intégrateur deux-axes 5 a pu être calibré, la configuration inclinée définie dans la figure 3 permettant une calibration des deux axes du fait que l'axe 15 est incliné à 45 degrés par rapport au soleil S.
   La connaissance de l'attitude permet alors d'orienter, à l'aide des tuyères, le satellite précisément selon l'axe de poussée pour le tir d'apogée.
- V :: Exécution (pendant environ une heure, pour fixer les idées, et de légèrement en amont jusqu'à légèrement en aval de l'apogée de l'orbite 13) du tir d'apogée par mise à feu de la tuyère 2 du moteur d'apogée. L'orbite circulaire définitive est classiquement atteinte après plusieurs manoeuvres d'apogée du même type. Au cours de cette manoeuvre d'apogée, la rigidité gyroscopique donnée par la roue d'inertie 3 n'est pas suffisante pour supporter les couples perturbateurs du moteur d'apogée. L'attitude est alors stabilisée soit en utilisant le ou les capteurs charge utile précités (12, 10), soit à l'aide du gyromètre deux-axes précité 5.
- VI :: Cette phase, non représentée au dessin, consiste classiquement, lorsque l'orbite circulaire définitive est atteinte (en général après plusieurs manoeuvres d'apogée durant chacune environ une heure et exécutées chacune au voisinage de l'apogée de l'orbite de transfert), à procéder à la dérive du satellite s jusqu'à sa position orbitale allouée.

Dans la majorité des cas, un tel système de contrôle d'attitude en transfert ne nécessite pas de matériel spécifique, car :
- la roue cinétique et le capteur solaire sont déjà prévus pour assurer le pointage de la plate-forme pendant la phase opérationnelle,
- le capteur stellaire ou terrestre infrarouge est déjà utilisé pour le pointage de la charge utile,
- le gyromètre deux-axes peut éventuellement être utilisé pour le maintien à poste afin de maintenir la précision de pointage.

Finalement, la configuration satellite basée sur une plate-forme inertielle pointée en direction du soleil permet de définir un système de commande d'orientation, basé sur un matériel minimum, qui est aussi simple et sûr qu'un système de transfert spinné tout en évitant les contraintes liées en particulier aux effets de ballottement de liquide et aux caractéristiques de masse et inertie.

## Revendications

1. Procédé de mise à poste d'un satellite de télécommunications géostationnaire (s), ce procédé étant du type selon lequel cette mise à poste comprend les phases successives suivantes :
- injection, à l'aide du lanceur, du satellite (s) sur une orbite de transfert des satellites géostationnaires (13) ;
- acquisition de l'attitude du tir d'apogée, effectuée au voisinage de l'apogée dans le but de placer le satellite sur son orbite de dérive définitive ;
- exécution de ce tir, ou manoeuvre, d'apogée ;
- lorsque cette orbite de dérive est atteinte, après un ou plusieurs tirs d'apogée : dérive du satellite sur orbite jusqu'à atteinte par celui-ci de sa position orbitale définitive,
caractérisé en ce qu'il consiste, successivement en adoptant pour ce satellite (s), une configuration connue en soi, alliant une plate-forme (1) toujours pointée vers le soleil (S) et une charge utile (7) orientable par rapport à cette plate-forme et toujours pointée vers la terre (T) :
- à injecter le satellite (s) sur son orbite de transfert (13) dans une attitude stabilisée trois-axes correspondant sensiblement à l'attitude de la manoeuvre d'apogée ;
- à mettre sous tension le dispositif de commande d'orientation équipant normalement ce satellite ;
- à effectuer alors l'opération d'acquisition solaire ;
- à mettre en vitesse, après avoir procédé à l'annulation des erreurs de pointage, la roue cinétique (3) qui équipe normalement le satellite (s), l'axe de rotation de cette roue cinétique étant, en raison de la configuration précitée adoptée pour ce satellite , aligné avec l'axe de poussée du moteur d'apogée (2), et cette mise en vitesse étant effectuée à une valeur suffisante pour obtenir une bonne rigidité gyroscopique ;
- à déployer au moins partiellement le générateur solaire (6) ;
- à commander l'orientation sur les trois-axes tout en annulant, de manière classique, les vitesses angulaires par réduction de la nutation ;
- à préparer alors la manoeuvre d'apogée en procédant, grâce à la connaissance de l'attitude, à l'orientation du moment cinétique de ladite roue (3) selon l'axe du tir d'apogée ;
- à procéder enfin, au voisinage de l'apogée de l'orbite de transfert, au tir d'apogée tout en procédant, au cours de ce tir d'apogée, à une commande d'orientation du satellite ; et
- lorsque l'orbite de dérive définitive est atteinte, après un ou plusieurs de ces tirs d'apogée, à procéder classiquement à la dérive du satellite jusqu'à sa position orbitale allouée.

2. Procédé de mise à poste selon la revendication 1, caractérisé en ce que ladite commande d'orientation sur les trois-axes est effectuée par l'intermédiaire d'un capteur deux-axes (4) équipant normalement le satellite(s) pour être utilisé à poste sur celui-ci.

3. Procédé de mise à poste selon la revendication 1 ou la revendication 2, caractérisé en ce que la préparation de la manoeuvre d'apogée est effectuée en utilisant, pour obtenir la référence d'attitude du troisième axe proche de la direction solaire, les capteurs équipant normalement la charge utile du satellite, tels que capteur stellaire (12) ou capteur terrestre (10).

4. Procédé de mise à poste selon la revendication 1 ou la revendication 2, caractérisé en ce que la préparation de la manoeuvre d'apogée est effectuée en utilisant un gyromètre deux-axes (5) équipant ce satellite et en effectuant, pour obtenir la référence d'attitude du troisième axe proche de la direction solaire, une manoeuvre spécifique consistant en une rotation du satellite de 90 degrés autour du moment cinétique de la roue (3), cette rotation utilisant une référence gyroscopique, ce qui conduit à un échange des axes transverses à la roue cinétique et permet d'obtenir la référence d'attitude à l'aide d'un moyen optique.

5. Procédé selon la revendication 4, caractérisé en ce que ce moyen optique comprend une tête optique supplémentaire orthogonale à celle normalement utilisée à poste.

6. Procédé selon la revendication 4, caractérisé en ce que ce moyen optique consiste en une lame semi-réfléchissante inclinée à 45 degrés devant la tête optique du capteur (4) normalement utilisé à poste.

7. Procédé selon l'une des revendications 1 à 6, caractérisé en ce que la commande d'orientation au cours du tir d'apogée est effectuée en utilisant le ou les capteurs (10, 12) de la charge utile (7).

8. Procédé selon l'une des revendications 1 à 6, caractérisé en ce que la commande d'orientation au cours du tir d'apogée est effectuée en utilisant le gyromètre deux-axes (5) équipant le satellite.

## Claims

1. Method of placing a geostationary telecommunication satellite (s) in orbit of the type comprising the following successive phases:
- injection of the satellite (s) by the launch vehicle into a geostationary satellite transfer orbit (13);
- acquisition of the apogee burn attitude near the apogee in order to place the satellite in its final drift orbit;
- execution of the apogee burn or maneuver;
- when the final drift orbit is reached, after one or more apogee burns: drifting of the satellite in this orbit until it reaches its final orbital position,
characterized in that, the satellite (s) having a configuration known in itself comprising a platform (1) pointed at all times towards the sun (S) and a payload (7) that can be steered relative to the platform and is pointed at all times towards the Earth (T):
- the satellite (s) is injected into its transfer orbit (13) in a three-axis stabilized attitude substantially corresponding to the apogee maneuver attitude;
- the orientation control device normally equipping the satellite is powered up;
- the solar acquisition operation is carried out;
- after pointing errors are eliminated, the momentum wheel (3) normally included in the satellite (s) is run up to speed, the rotation axis of the momentum wheel being aligned with the thrust axis of the apogee thruster (2), because of the aforementioned configuration adopted for the satellite, to a speed sufficient to obtain sufficient gyroscopic stiffness;
- the solar generator (6) is at least partly deployed;
- orientation with respect to the three axes is commanded, with the angular speeds eliminated in the conventional way by reducing the nutation;
- the apogee maneuver is prepared by, knowing the attitude of the satellite, orienting the kinetic moment of said wheel (3) with the apogee burn axis;
- the apogee burn is carried out near the apogee of the transfer orbit with the satellite orientation controlled during the apogee burn; and
- when the final drift orbit is achieved, after one or more apogee burns, the satellite is allowed to drift in the conventional way to its final orbital position.

2. Orbit transfer method according to claim 1 characterized in that said three-axis orientation control is effected by means of a two-axis sensor (4) normally equipping the satellite (s) for use on station.

3. Orbit transfer method according to claim 1 or claim 2 characterized in that said apogee maneuver preparation is effected using, to obtain the attitude reference of the third axis near the solar direction, the sensors normally included in the satellite payload, such as star (12) or terrestrial (10) sensors.

4. Orbit transfer method according to claim 1 or claim 2 characterized in that said apogee maneuver preparation is effected using a two-axis rate gyro (5) of the satellite and, to obtain the attitude reference of the third axis near the solar direction, a specific maneuver entailing rotating the satellite through 90° about the kinetic moment of the wheel (3), said rotation being governed by a gyroscopic reference, which results in an interchange of the axes transverse to the momentum wheel and makes it possible to obtain the attitude reference by optical means.

5. Method according to claim 4 characterized in that said optical means comprise a supplementary optical head orthogonal to that normally used on station.

6. Method according to claim 4 characterized in that said optical means comprise a semi-reflecting mirror inclined at 45° in front of the optical head of the sensor (4) normally used on station.

7. Method according to any one of claims 1 to 6 characterized in that orientation control during the apogee burn is effected using the sensor or sensors (10, 12) of the payload (7).

8. Method according to any one of claims 1 to 6 characterized in that orientation control during the apogee burn is effected using the two-axis rate gyro (5) of the satellite.

## Patentansprüche

1. Verfahren zum Positionieren eines geostationären Fernmeldesatelliten (s), das die nachstehenden aufeinanderfolgenden Phasen aufweist:
- Einschießen des Satelliten (s) mit einer Trägerrakete auf eine Übergangsbahn für geostationäre Satelliten (13),
- Erfassen der Einstellung des Apogäumschusses, durchgeführt in der Nähe des Apogäums mit dem Ziel, den Satelliten auf seiner endgültigen Umlaufbahn zu plazieren,
- Ausführen des Apogäumschusses bzw. -manövers,
- Einsteuern des Satelliten auf die Umlaufbahn bis zum Erreichen der endgültigen Orbitalposition durch den Satelliten, wenn die angesteuerte Umlaufbahn nach einem oder mehreren Apogäumsschüssen erreicht ist,
dadurch gekennzeichnet, daß das Verfahren unter Anwendung einer an sich bekannten Konfiguration für den Satelliten (s), die eine stets auf die Sonne (S) gerichtete Plattform (1) mit einer relativ zu dieser Plattform orientierbaren und stets zur Erde (T) zeigenden Nutzlast (7) verbindet, nacheinander darin besteht:
- den Satelliten (s) in seine Übergangsbahn (13) in einer dreiaxial stabilisierten Fluglage einzuschießen, die der Fluglage des Apogäumsmanövers entspricht,
- die orientierungssteuereinrichtung einzuschalten, die normalerweise zur Ausrüstung des Satelliten gehört,
- die Sonnenposition zu erfassen,
- das kinetische Rad (3), das normalerweise zur Ausrüstung des Satelliten (s) gehört, auf seine Geschwindigkeit hochzufahren, nachdem die Beseitigung von Ausrichtungsfehlern erfolgt ist, wobei die Drehachse des kinetischen Rades aufgrund der erwähnten, für den Satelliten angenommenen Konfiguration mit der Schubachse des Apogäumsmotors (2) in Flucht liegt und wobei dieses Hochfahren auf einen Geschwindigkeitswert bewirkt wird, der ausreicht, eine gute Kreiselsteifigkeit zu erhalten,
- den Sonnengenerator (6) mindestens teilweise zu entfalten,
- die Ausrichtung auf die drei Achsen zu steuern und zugleich die Winkelgeschwindigkeiten durch Verringern der Taumelbewegung in üblicher Weise zu Null zu machen,
- alsdann das Apogäumsmanöver vorzubereiten, und zwar durch Ausrichtung des kinetischen Moments des kinetischen Rades (3) in Richtung der Achse des Apogäumsschusses aufgrund der Kenntnis der Position,
- den Apogäumsschuß in der Nähe des Apogäums der Übergangsbahn vorzunehmen und zugleich eine Ausrichtungssteuerung des Satelliten im Verlaufe des Apogäumsschusses vorzunehmen, und
- in herkömmlicher Weise, wenn die endgültige Umlaufbahn nach einem oder mehreren Apogäumsschüssen erreicht ist, die Einsteuerung des Satelliten bis in seine zugewiesene Orbitalposition durchzuführen.

2. Positionierungsverfahren nach Anspruch 1, dadurch gekennzeichnet, daß die Ausrichtungssteuerung nach den drei Achsen durch einen Zweiachsensor (4) bewirkt wird, der zur normalen Ausrüstung des Satelliten (s) gehört, um auf ihm operativ benutzt zu werden.

3. Positionierungsverfahren nach Anspruch 1 oder Anspruch 2, dadurch gekennzeichnet, daß die Vorbereitung des Apogäumsmanövers unter Verwendung der Sonden, die normal zur Ausrüstung der Nutzlast des Satelliten gehören, wie etwa der Gestirnsonde (12) oder der Erdsonde (10) durchgeführt wird, um die Bezugsstellung der dritten Achse nahe bei der Sonnenrichtung zu erhalten.

4. Positionierungsverfahren nach Anspruch 1 oder Anspruch 2, dadurch gekennzeichnet, daß die Vorbereitung des Apogäumsmanövers unter Benutzung eines Zweiachsenkreisels (5), der zur Ausrüstung des Satelliten gehört, sowie eines spezifischen Manövers durchgeführt wird, das in einer Drehung des Satelliten um 90° um das kinetische Moment des Rades (3) besteht, um die Bezugsrichtung der dritten Achse nahe bei der Sonnenrichtung zu erhalten, wobei die Drehung eine Kreiselbezugsgröße verwendet, was zu einem Austausch der quer zum kinetischen Rad verlaufenden Achsen führt und es ermöglicht, die Bezugsstellung mit Hilfe einer optischen Einrichtung zu erhalten.

5. Positionierungsverfahren nach Anspruch 4, dadurch gekennzeichnet, daß die optische Einrichtung einen zusätzlichen optischen Kopf aufweist, der senkrecht zum normalerweise operativ benutzten Kopf steht.

6. Positionierungsverfahren nach Anspruch 4, dadurch gekennzeichnet, daß die optische Einrichtung aus einer halbreflektierenden Plättchen besteht, die um 45° gegen den optischen Kopf des Sensors (4) geneigt ist, der normalerweise operativ benutzt wird.

7. Positionierungsverfahren nach einem der Ansprüche 1 bis 6, dadurch gekennzeichnet, daß die Ausrichtungssteuerung im Verlauf des Apogäumsschusses unter Verwendung des oder der Sonden (10, 12) der Nutzlast (7) durchgeführt wird.

8. Positionierungsverfahren nach einem der Ansprüche 1 bis 6, dadurch gekennzeichnet, daß die Orientierungssteuerung im Verlauf des Apogäumsschusses unter Verwendung des Zweiachsenkreisels (5) durchgeführt wird, der zur Ausrüstung des Satelliten gehört.
